# EUROPÄISCHE PATENTSCHRIFT

(11) **EP 0 503 231 B1**
(45) Veröffentlichungstag und Bekanntmachung des Hinweises auf die Patenterteilung: **03.04.1996**
(21) Anmeldenummer: 92100603.7
(22) Anmeldetag: 15.01.1992
(51) Int. Cl.: A47D 5/00, A47D 15/00

(54) **Unterlage für ein Kleinkind**
Support for babies
Support pour bébé

(30) Priorität: 14.03.1991 DE 9103109 U
(43) Veröffentlichungstag der Anmeldung: 16.09.1992
(73) Patentinhaber: Beger, Udo, D-84032 Landshut (DE)
(72) Erfinder: Beger, Udo, D-84032 Landshut (DE)
(74) Vertreter: Grünecker, Kinkeldey, Stockmair & Schwanhäusser Anwaltssozietät

(56) Entgegenhaltungen:
- US-A- 3 761 975
- US-A- 4 607 402

## Beschreibung

Die Erfindung bezieht sich auf eine Unterlage der im Oberbegriff von Anspruch 1 erläuterten Art.

Eine derartige Unterlage ist aus der US-A-3 761 975 bekannt. Die bekannte Unterlage enthält mehrere Lagen eines Kunststoffmaterials, die im Bereich eines später die Liegefläche bildenden Bodens fest miteinander verbunden sind. Im Randbereich ist zwischen zwei der drei Lagen ein Aufnahmehohlraum für Luft vorgesehen. Der Aufnahmehohlraum wird durch zwei parallel zueinander verlaufende Schweißnähte gebildet, zwischen denen die zwei Lagen schlaufenartig unverbunden sind. Der Aufnahmehohlraum zwischen den beiden Parallelnähten wird aufgeblasen und bildet einen erhöhten Randbereich, der ein Kleinkind gegen ein Herabrollen von der Unterlage schützen soll. Zum Aufbewahren wird die Luft aus einem Aufnahmehohlraum abgelassen, so daß die Unterlage zusammengefaltet werden kann. Die bekannte Unterlage ist jedoch nur in der durch die starr mit dem Boden verbundenen Randbereiche vorgegebenen Größe verwendbar.

Es sind weiterhin Wickelauflagen für Kleinkinder bekannt, bei denen die Randbereiche durch eine verstärkte Polsterung erhöht sind, um ein Herabrollen des Kleinkindes zumindest zu erschweren. Diese Wickelauflagen sind jedoch nur für den vorgesehenen Zweck, d.h. nur zum Wickeln von Kleinkindern, brauchbar. Sie sind recht sperrig, so daß ihre Aufbewahrung Schwierigkeiten bereiten kann. Sind die Kinder aus dem Wickelalter heraus, sind die bekannten Wickelauflagen überflüssig, da sie für keinen anderen Zweck eingesetzt werden können.

Weiterhin gibt es flach auf den Boden zu legende Krabbeldecken. Diese weisen jedoch keine seitlichen Randbegrenzungen auf, so daß beispielsweise Spielzeug sehr leicht von der Decke rollen und das Kleinkind veranlassen kann, ihm zu folgen.

Aus der US-A-4 607 402 ist ein Matratzenschutztuch bekannt, bei dem in der Mitte eine Liegefläche durch entfernbares Polstermaterial eingegrenzt ist. Das Polstermaterial ist in Form von Rollen in einem Aufnahmematerial aufgenommen, das durch einen Stoffstreifen gebildet wurde, dessen freie Längskanten im Abstand zueinander am Matratzenschutztuch festgenäht wurden. Eine Veränderung der Größe der Liegefläche ist nicht möglich.

Der Erfindung liegt die Aufgabe zugrunde, eine Unterlage für ein Kleinkind bereitzustellen, die universell verwendbar ist und sich einfach aufbewahren läßt.

Die Aufgabe wird durch die kennzeichnenden Merkmale des Anspruchs 1 gelöst.

Die erfindungsgemäße Unterlage ist beispielsweise als Wickelauflage, Krabbeldecke oder als Einlage in Gitterbetten oder Laufställen geeignet, wobei die Größe der Unterlage durch wahlweises Ein- oder Ausklappen der das Füllmaterial enthaltenden Randbereiche vergrößert oder verkleinert werden kann, so daß es im wesentlichen der gewünschten Größe entspricht. Beim Einklappen der Randbereiche wird weiterhin die Ansatznaht für den Aufnahmehohlraum verdeckt, was bei der relativ kleinen Liegefläche, die durch Einklappen der Randbereiche geschaffen wird, einen weiteren Vorteil darstellt, da das Kind dann nicht auf diese Randbereiche zu liegen kommt.

Zweckmäßigerweise wird das Füllmaterial in einem gemäß Anspruch 2 vorgesehenen Aufnahmehohlraum untergebracht.

Anspruch 3 beschreibt eine besonders bevorzugte Ausgestaltung wie die Randbereiche mit dem Füllmaterial in Richtung zur Mitte des Bodens geklappt werden können, so daß einerseits die Ansatznaht verdeckt wird und sich andererseits ein anderes Außenmaß ergibt.

Die Ausgestaltung des Aufnahmehohlraums gemäß Anspruch 4 erlaubt eine einfache und kostengünstige Herstellung. Darüberhinaus sind, falls ein gepolstertes Material für den Boden verwendet wird, auch die Randbereiche zusätzlich gepolstert.

Durch die Ausgestaltung nach Anspruch 5 kann die Größe der Bodenfläche je nach Bedarf variiert werden. So kann es beispielsweise wünschenwert sein, die Unterlage zur Verwendung als Wickelauflage in ihrer Bodengröße zu halbieren, wobei das nicht benötigte Stück nach hinten geklappt werden kann. Soll die Unterlage dann wieder beispielsweise als Krabbeldecke verwendet werden, kann sie in ihrer vollen Größe eingesetzt werden.

Anspruch 6 beschreibt eine besonders bevorzugte Anordnung des Füllmaterials zur Unterteilung der Bodenflächen.

Anspruch 7 beschreibt ein besonders bevorzugtes Füllmaterial, das einfach zu handhaben ist und seinerseits nicht aufbewahrt werden muß, wie dies beispielsweise bei Füllmaterial aus Schaumstoff oder dgl. notwendig wäre. Trotzdem ist selbstverständlich eine Schaumstoffrolle oder dgl. als Füllmaterial ebenfalls brauchbar.

Zweckmäßigerweise wird gemäß Anspruch 8 ein aufblasbarer Schlauch verwendet, der in den Aufnahmehohlraum einsetzbar oder dort befestigt ist.

Durch die Ausgestaltung nach den Ansprüchen 9 und 10 kann die erfindungsgemäße Unterlage mit einer zweiten, ebenfalls erfindungsgemäß ausgerüsteten Unterlage zu einer größeren Fläche zusammengesetzt werden. Dabei wird durch die Maßnahme nach Anspruch 10 sichergestellt, daß die verbindenden Reißverschlußteile zur Vermeidung von Verletzungen abgedeckt sind.

Durch die Ausgestaltung nach Anspruch 11 wird die Möglichkeit zur Größenveränderung erweitert.

Ausführungsbeispiele der Erfindung werden nachfolgend anhand der Zeichnungen näher erläutert. Es zeigen:
- Fig. 1: eine perspektivische Darstellung eines ersten Ausführungsbeispiels der Erfindung mit ausgeklappten Randbereichen,
- Fig. 2: den Schnitt II-II aus Fig. 1,
- Fig. 3: eine perspektivische Darstellung eines zweiten Ausführungsbeispiels der Erfindung mit hochgeklappten Rändern, und
- Fig. 4: eine perspektivische Darstellung der Unterlage nach Fig. 3 als Wickelauflage.

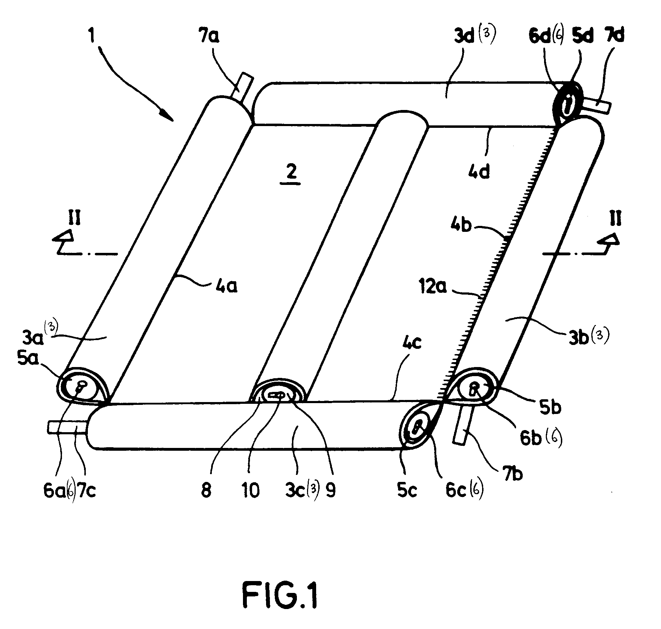

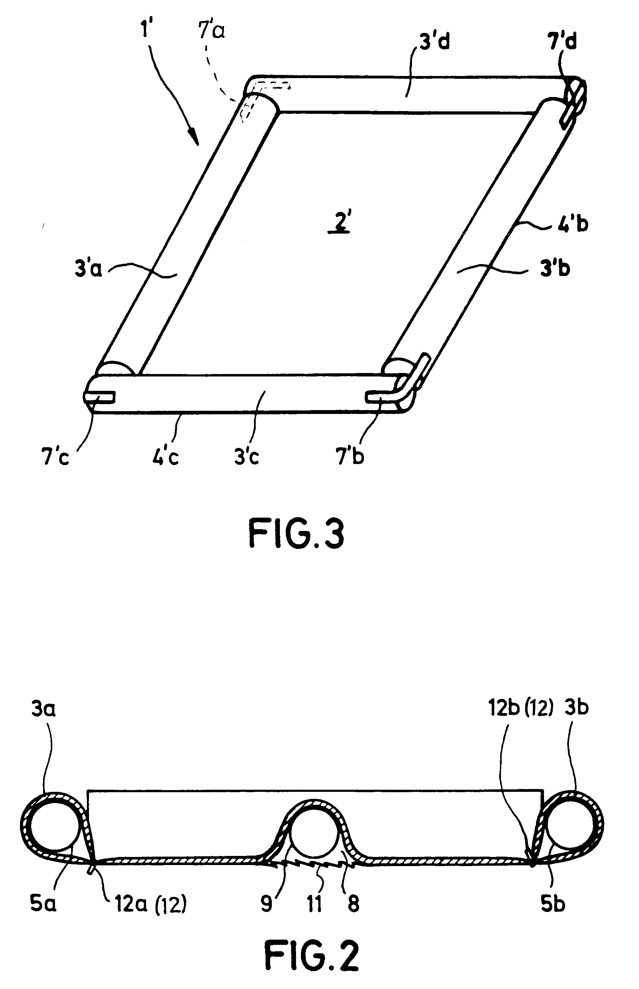

In den Figuren 1 und 2 ist eine Unterlage 1 für ein Kleinkind ersichtlich, die einen viereckigen (Figur 1 quadratisch, Figur 2 rechteckig) Boden 2 aus einem wattierten Material aufweist. An allen vier gradlinigen Seiten des Bodens 2 ist jeweils eine durchgehende Schlaufe 3a, 3b, 3c, 3d angeordnet. Jede Schlaufe 3 wurde dadurch gebildet, daß Verlängerungslappen aus dem Material des Bodens 2 an diesem Rand nach oben innen oder unten außen umgeschlagen und mit einer Ansatznaht 4a, 4b, 4c, 4d wieder am Boden 2 festgenäht wurde. Auf diese Weise werden durch die Schlaufen 3a bis 3d Aufnahmehohlräume gebildet, deren Länge der Länge des anliegenden Randbereichs des Bodens 2 entspricht. In die Aufnahmehohlräume werden luftgefüllte zylinderische ballonartige Schläuche 5a, 5b, 5c, 5d eingeschoben. Die Schläuche 5 sind jeweils so lang, wie die ihnen zugeordnete Schlaufe 3, es können jedoch auch in jeder oder in ausgewählten Schlaufen 3 zwei oder noch mehr dieser Schläuche untergebracht werden. Jeder Schlauch 5 ist mit einem Ventil 6a, 6b, 6c, 6d an seiner Stirnseite versehen, durch die die Schläuche aufgeblasen bzw. die als Füllmaterial wirkende Luft abgelassen werden kann. Die Ventile 6 können beispielsweise in der Art von Luftmatratzenventilen ausgebildet sein.

Die Ansatznähte 4a bis 4d sind als Sollbiegestellen ausgebildet, so daß jede der Schlaufen 3 nach innen auf den Boden 2 geklappt werden kann, wobei sich die Schlaufen 3 und das in ihnen enthaltende Füllmaterial zu einem vollständigen, den Umfang des Bodens 2 umgebenden Rand ergänzen und eine Stirnfläche eines eingeklappten Randbereichs am benachbarten Randbereich anliegt. Je nach Anzahl der hochgeklappten Randbereiche und der Art bzw. der Reihenfolge, in der die Randbereiche geklappt werden, ergeben sich unterschiedliche Größen der Unterlage. Um die Schlaufen 3 in dieser Lage auch ohne Anlage an einen Laufstall oder Gitterbett zu fixieren, sind Verbindungsmittel in Form von Klettverschlußbändern 7a, 7b, 7c, 7d vorgesehen.

Quer über den Boden 2, von der Schlaufe 3c zur Schlaufe 3d erstreckt sich ein weiterer Aufnahmehohlraum 8 für einen oder mehrere der luftgefüllten Schläuche 9, wobei wiederum ein Ventil 10 vorgesehen ist. Der Aufnahmehohlraum 8 ist, wie auch Figur 2 zeigt, durch Aufwölbung des wattierten Bodenmaterials gebildet, wobei diese Aufwölbung an der Unterseite durch einen Verbindungsstreifen 11 aus dünnem Stoff und mit genügender Breite abgedeckt wird, so daß das den Aufnahmehohlraum bildende Bodenmaterial wieder flachgelegt werden kann, wenn der luftgefüllte Schlauch entfernt oder die Luft aus ihm abgelassen wurde.

Um die erfindungsgemäße Unterlage 1 gegebenenfalls mit einer weiteren, gleich ausgebildeten Unterlage verbinden zu können, ist ein aushängbarer Reißverschluß 12 vorgesehen, wobei die Teile 12a, 12b des Reißverschlusses jeweils in der Nähe der Ansatznähte 4a, 4b an einander gegenüberliegenden Seiten des Bodens 2 angeordnet sind. Dabei ist ein Teil 12a des Reißverschlusses auf der Unterseite der Unterlage 1 und das andere Teil 12b auf ihrer Oberseite angeordnet. Auf diese Weise überdecken die jeweils anliegenden Schlaufen 3a, 3b in flachem Zustand, d. h. bei entferntem Füllmaterial, die Reißverschlußverbindung zwischen zwei verbundenen Unterlagen. Selbstverständlich können die Reißverschlußteile auch an den äußersten Kanten der Schlaufen in flachliegendem Zustand angeordnet sein.

In Figur 3 ist ein weiteres, vereinfachtes Ausführungsbeispiel einer Unterlage 1' ersichtlich, wobei mit dem Ausführungsbeispiel nach Anspruch 1 vergleichbare Teile mit den gleichen Bezugszeichen, ergänzt durch einen Hochstrich, bezeichnet und nicht nochmals erläutert wurden. Die Unterlage 1' ist im wesentlichen wie die Unterlage 1 aufgebaut und hergestellt, weist jedoch den mittigen Aufnahmehohlraum 8 nicht auf und hat einen quadratischen Boden 2'. Die Unterlage 1' ist in Figur 3 mit hochgeklappten Schlaufen 3'a bis 3'd gezeigt, wobei die Befestigungsstreifen 7'a bis 7'd die Schlaufen 3 in der hochgeklappten Stellung halten. Durch dieses Hochklappen der Schlaufen kann gleichzeitig die Form und Größe der Außenkontur in gewünschter Weise verändert werden (quadratisch - rechteckig).

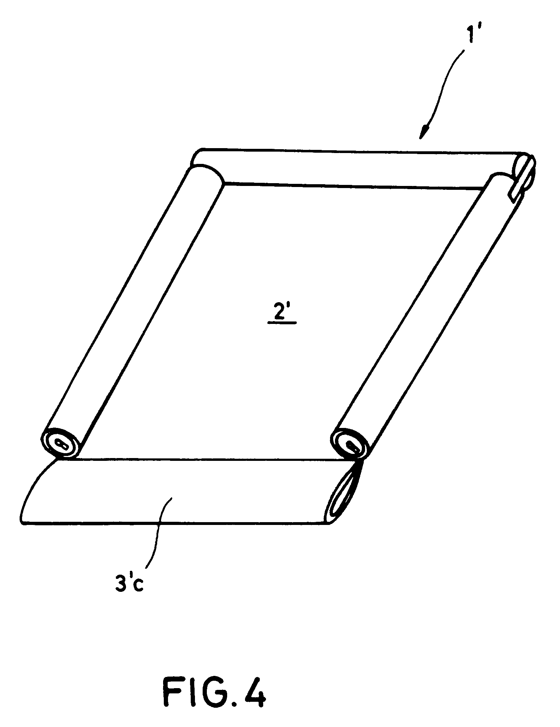

Figur 4 zeigt die Verwendung der Unterlage 1' als Wickelauflage, bei der das Füllmaterial aus der vorderen Schlaufe 3'c entfernt und diese flachgelegt wurde. Aber auch die Unterlage nach Figur 1 kann sowohl als Krabbeldecke oder Einlage mit vier erhöhten Randbereichen als auch als Wickelauflage eingesetzt werden, wobei beispielsweise bei einer Verwendung als Wickelauflage der im Boden befindliche Hohlraum gefüllt und die Luft aus den nicht benötigten Teilen der Randbereiche abgelassen und nach unten umgeschlagen werden kann. Für diesen Anwendungszweck ist es vorteilhaft, wenn die Randbereiche, die jeweils senkrecht zum Bodenhohlraum verlaufen, jeweils zwei luftgefüllt Schläuche enthalten. Die erfindungsgemäße Unterlage kann weiterhin als Einlage für ein Kinderbettchen mit Gitterwänden benutzt werden, wobei die erhöhten Randbereiche insbesondere an den Gitterwänden einen Schutz gegen das Durchstecken der Füße bilden. Mit den gleichen Vorteilen kann die erfindungsgemäße Unterlage auch in einen Laufstall eingelegt werden.

In Abwandlung der beschriebenen und gezeichneten Ausführungsbeispiele können die Schlaufen selbst luftundurchlässig und mit den Ventilen versehen sein, so daß ein zusätzlicher Schlauch nicht notwendig ist. Anstelle von Luft kann anderes Füllmaterial, wie beispielsweise eine Schaumstoffrolle oder eine mit Polsterwatte gefüllte Rolle verwendet werden. Zusätzliche Aufnahmehohlräume im Boden können auch in Querrichtung oder an jeder erforderlichen Stelle vorgesehen werden. Als Verbindungsmittel können auch Klettverschlüsse oder dergleichen eingesetzt werden. Die Schlaufe kann vorgefertigt und angenäht oder sonst wie befestigt werden. Nach Bedarf können die erhöhbaren Randbereiche auch nur an einer, zwei oder drei Seiten des Bodens vorgesehen werden. Mit der erfindungsgemäßen Ausgestaltung kann die gewünschte Form der Randbereiche jedoch auf einfache Weise dadurch bestimmt werden, daß das Füllmaterial an demjenigen Randbereich, der nicht erhöht werden soll, beispielsweise die Vorderseite bei einer Wickelauflage, entfernt wird.

## Patentansprüche

1. Unterlage (1, 1') für ein Kleinkind, mit einem vorzugsweise gepolsterten Boden (2, 2') und wenigstens einen durch ein Füllmaterial (5) erhöhten Randbereich (3, 3'), wobei das Füllmaterial (5) nach Bedarf zum Absenken des Randbereichs (3, 3') entfernbar ist, **dadurch gekennzeichnet**, daß der Randbereich (3, 3') derart schwenkbar mit dem Boden (2, 2') verbunden ist, daß der Randbereich (3, 3') mit dem Füllmaterial (5) zum Verändern der Größe der Unterlage nach innen in Richtung auf den Boden (2, 2') und zurück klappbar ist.

2. Unterlage nach Anspruch 1, **dadurch gekennzeichnet**, daß das Füllmaterial (5) in einem am Randbereich (3, 3') angeordenten Aufnahmehohlraum untergebracht ist.

3. Unterlage nach einem der Ansprüche 1 oder 2, **dadurch gekennzeichnet**, daß der Aufnahmehohlraum durch eine Schlaufe (3a bis 3d, 3'a bis 3'd) gebildet ist, die über eine Sollbiegestelle (4a bis 4d, 4'a bis 4'd) mit dem Boden (2, 2') verbunden ist.

4. Unterlage nach Anspruch 3, **dadurch gekennzeichnet**, daß die Schlaufe (3a bis 3d; 3'a bis 3'd) aus Bodenmaterial besteht.

5. Unterlage nach einem der Ansprüche 1 bis 4**, dadurch gekennzeichnet**, daß zusätzlich in wenigstens einem Bereich des Bodens (2) entfernbares Füllmaterial (9) zum Unterteilen der Bodenfläche vorgesehen ist.

6. Unterlage nach Anspruch 5, **dadurch gekennzeichnet**, daß das Füllmaterial (9) in einem in den Boden (2) eingearbeiteten, schmalen, langgestreckten Aufnahmehohlraum (8) untergebracht ist.

7. Unterlage nach einem der Ansprüche 1 bis 6, **dadurch gekennzeichnet**, daß die Unterlage zur Aufnahme von Luft als Füllmaterial wenigstens einen luftundurchlässigen Bereich mit einem Ventil (6, 10) zum Einblasen und Auslassen der Luft aufweist.

8. Unterlage nach Anspruch 7**, dadurch gekennzeichnet**, daß die Luft in einem mit dem Ventil (6a bis 6d, 10) versehenen, aufblasbaren Schlauch (5a bis 5d, 9) aufgenommen ist, der in den Aufnahmehohlraum (3a bis 3d, 3'a, bis 3'd, 8) einsetzbar ist.

9. Unterlage nach einem der Ansprüche 1 bis 8, **dadurch gekennzeichnet**, daß ein Verbindungsmittel, insbesondere ein zweiteiliger, aushängbarer Reißverschluß (12a, 12b) vorgesehen ist, um wenigstens zwei Unterlagen miteinander zu verbinden.

10. Unterlage nach Anspruch 9, **dadurch gekennzeichnet**, daß ein Teil (12b) des aushängbaren Reißverschlusses an der Oberseite einer Ansatznaht (4b) der Schlaufe (3b) in einem Randbereich und der andere Teil (12a) des Reißverschlusses an der Unterseite einer Ansatznaht (4a) des gegenüberliegenden Randbereichs befestigt ist.

11. Unterlage nach einem der Ansprüche 1 bis 10, **dadurch gekennzeichnet**, daß der Boden (2) wenigstens zwei durch das Füllmaterial (5) erhöhte Randbereiche (3, 3') aufweist, wobei jeder der Randbereiche (3, 3') unabhängig vom anderen absenkbar und verschwenkbar ist.

## Claims

1. Mat (1, 1') for an infant, having a preferably padded base (2, 2') and at least one edge region (3, 3') raised by means of a filling material (5), the filling material (5) if required being removable to lower the edge region (3, 3'), **characterized in that** the edge region (3, 3') is connected in such a swivelling manner to the base (2) that the edge region (3, 3') with the filling material (5) may be folded in towards the base (2, 2') and back in order to vary the size of the mat.

2. Mat according to claim 1, **characterized in that** the filling material (5) is accommodated in a receiving cavity disposed at the edge region (3, 3').

3. Mat according to one of claims 1 or 2, **characterized in that** the receiving cavity is formed by a loop (3a to 3d, 3'a to 3'd) which is connected by a predetermined bending point (4a to 4d, 4'a to 4'd) to the base (2, 2').

4. Mat according to claim 3, **characterized in that** the loop (3a to 3d; 3'a to 3'd) is made of the base material.

5. Mat according to one of claims 1 to 4**, characterized in that** removable filling material (9) is additionally provided in at least one region of the base (2) in order to subdivide the base surface.

6. Mat according to claim 5, **characterized in that** the filling material (9) is accommodated in a narrow, elongated receiving cavity (8) worked into the base (2).

7. Mat according to one of claims 1 to 6, **characterized in that** the mat, for receiving air as a filling material, has at least one airtight region with a valve (6, 10) for admitting and discharging the air.

8. Mat according to claim 7, **characterized in that** the air is received in an inflatable tube (5a to 5d, 9), which is provided with the valve (6a to 6d, 10) and is insertable into the receiving cavity (3a to 3d, 3'a to 3'd, 8).

9. Mat according to one of claims 1 to 8, **characterized in that** a connection means, in particular a two-part, separable zip fastener (12a, 12b), is provided for connecting at least two mats to one another.

10. Mat according to claim 9, **characterized in that** one part (12b) of the separable zip fastener is fastened to the top side of a join seam (4b) of the loop (3b) in one edge region and the other part (12a) of the zip fastener is fastened to the underside of a join seam (4a) of the opposite edge region.

11. Mat according to one of claims 1 to 10, **characterized in that** the base (2) has at least two edge regions (3, 3') raised by the filling material (5), each of the edge regions (3, 3') being capable of lowering or swivelling independently of the other.

## Revendications

1. Support (1, 1') pour bébé comportant un fond (2, 2'), de préférence rembourré, et au moins une zone marginale (3, 3') surélevée par une matière de remplissage (5), la matière de remplissage (5) pouvant en cas de besoin être retirée pour rabattre la zone marginale (3, 3'), caractérisé en ce que la zone marginale (3, 3') est reliée avec le fond (2, 2') de façon à pouvoir pivoter de telle sorte que, pour modifier la dimension du support, la zone marginale (3, 3') avec la matière de remplissage (5) peut être rabattue vers l'intérieur en direction du fond (2, 2') et à l'opposé.

2. Support selon la revendication 1, caractérisé en ce que la matière de remplissage (5) est insérée dans un espace creux de réception qui est prévu au niveau de la zone marginale (3, 3').

3. Support selon l'une des revendications 1 ou 2, caractérisé en ce que l'espace creux de réception est formé par un bourrelet (3a à 3d, 3'a à 3'd), qui est relié au fond (2, 2') par un point de pliage prescrit (4a à 4d, 4'a à 4'd).

4. Support selon la revendication 3, caractérisé en ce que le bourrelet (3a à 3d ; 3'a à 3'd) est constitué de la matière du fond.

5. Support selon l'une des revendications 1 à 4, caractérisé en ce qu'en outre, de la matière de remplissage (9) pouvant être retirée, est prévue dans au moins une partie du fond (2) pour subdiviser la surface de fond.

6. Support selon la revendication 5, caractérisé en ce que la matière de remplissage (9) est insérée dans un espace creux de réception (8) étroit et oblong qui est intégré dans le fond (2).

7. Support selon l'une des revendications 1 à 6, caractérisé en ce que, pour l'introduction d'air en tant que matière de remplissage, le support comporte au moins une partie étanche à l'air munie d'une valve (6, 10) destinée à l'injection et à l'évacuation de l'air.

8. Support selon la revendication 7, caractérisé en ce que l'air est reçu dans une chambre (5a à 5d, 9) gonflable munie de la valve (6a à 6d, 10), et qui peut être insérée dans l'espace creux de réception (3a à 3d, 3'a à 3'd, 8).

9. Support selon l'une des revendications 1 à 8, caractérisé en ce qu'il est prévu un moyen de liaison, notamment une fermeture à glissière amovible en deux parties (12a, 12b), afin de relier au moins deux supports entre eux.

10. Support selon la revendication 9, caractérisé en ce qu'une partie (12b) de la fermeture à glissière amovible est fixée dans une zone marginale en partie supérieure d'une couture d'embase (4b) du bourrelet (3b), et que l'autre partie (12a) de la fermeture à glissière est fixée en partie inférieure d'une couture d'embase (4a) de la zone marginale située en face.

11. Support selon l'une quelconque des revendications 1 à 10, caractérisé en ce que le fond (2) comporte au moins deux zones marginales (3, 3') surélevées par la matière de remplissage (5), chacune des zones marginales (3, 3') pouvant être rabattue et pivotée indépendamment l'une de l'autre.
